# EUROPÄISCHE PATENTSCHRIFT

(11) **EP 4 456 716 B1**
(45) Veröffentlichungstag und Bekanntmachung des Hinweises auf die Patenterteilung: **12.11.2025**
(21) Anmeldenummer: 22843776.0
(22) Anmeldetag: 22.12.2022
(51) Int. Cl.: A01J 7/02

(54) **MELKVORRICHTUNG MIT EINER REINIGUNGSEINRICHTUNG**
MILKING DEVICE WITH A CLEANING UNIT
DISPOSITIF DE TRAITE DOTÉ D'UNE UNITÉ DE NETTOYAGE

(30) Priorität: 29.12.2021 DE 102021006390
(43) Veröffentlichungstag der Anmeldung: 06.11.2024
(73) Patentinhaber: GEA Farm Technologies GmbH, 59199 Bönen (DE)
(72) Erfinder: BIELETZKI, Sascha, 59199 Bönen (DE)
(74) Vertreter: Neumann, Ditmar
(86) Internationale Anmeldenummer: PCT/EP2022/087550
(87) Internationale Veröffentlichungsnummer: WO 2023/126318

(56) Entgegenhaltungen:
- EP-B1- 3 248 457
- WO-A1-2013/081534
- US-B2- 11 147 235

## Beschreibung

Der Gegenstand der Erfindung bezieht sich auf eine Melkvorrichtung mit einer Reinigungseinrichtung.

Rohmilch ist ein wichtiges Lebensmittel sowie ein Ausgangsstoff für die Nahrungsmittelindustrie. Zum Schutz des Verbrauchers sowie zur technischen Verarbeitungsfähigkeit besteht die Notwendigkeit, dass Milch sowohl nationalen als auch internationalen Qualitätsanforderungen entspricht. Hierzu gibt es entsprechende nationale oder internationale Regelungen, die eingehalten werden müssen. So darf bspw. Milch keine anormalen sensorischen Merkmale aufweisen. Um dies zu erreichen, muss das Euter von Tieren, von denen Milch als Lebensmittel gewonnen wird, zu Beginn des Melkvorgangs gereinigt werden. Hierbei ist es erforderlich, dass eine gründliche und vollständige Reinigung erfolgt.

Wichtig ist auch die Einhaltung vorgegebener hygienischer Standards, um eine hohe Milchqualität sicherzustellen. Es ist daher nicht nur notwendig, Euter und Zitzen des Tieres, sondern auch die Komponenten der Melkvorrichtung zu reinigen. Die Reinigung kann auch eine Desinfektion der Komponenten der Melkvorrichtung umfassen. Der Reinigungsvorgang kann mittels eines Fluids, insbesondere mittels Wassers, mit und ohne reinigende, desinfizierende oder sonstigen Zusätzen durchgeführt werden. Ein Fluid wird nachfolgend als Fluid bezeichnet. Insbesondere ist es notwendig, das Melkzeug von Milchresten zu reinigen und zu desinfizieren. Es ist nicht zwingend, dass eine Desinfektion der Melkanlage bzw. der Melkvorrichtung bei einem jedem Reinigungsvorgang erfolgt. Der Reinigungsvorgang kann auch nach jedem Melkvorgang oder nach einer bestimmten Anzahl von Melkvorgängen stattfinden.

Es ist bekannt, dass nach dem Melken einer jeden Kuh das Melkzeug mit Wasser, einer Desinfektionslösung und wiederum Wasser gereinigt und ggf. mit Druckluft getrocknet wird. Dabei handelt es sich um eine sogenannte Zwischenreinigung.

Durch die WO 2010/052250 A2 ist eine Reinigungseinheit zum Reinigen wenigstens eines Kopfabschnitts eines Melkbechers bekannt. Zum Durchführen eines Reinigungsvorgangs wird der Kopfabschnitt des Zitzengummis in der Reinigungseinheit positioniert. Beim Einsetzen des Kopfabschnitts wird ein Wandbereich der Reinigungseinheit in Umfangsrichtung gedehnt, so dass das Einsetzen des Kopfabschnitts erleichtert wird. Des Weiteren wird hierdurch auch eine gewisse Abdichtung zwischen der Reinigungseinheit und dem Kopfabschnitt erreicht. Zur Reinigung des Kopfabschnitts wird über eine Zuleitung ein Fluid in eine sich in den Melkbecher erstreckende Spülkerze, die Auslassöffnungen aufweist, zugeführt. Das Fluid kann dann durch den Melkbecher bzw. durch eine Mehrzahl von Melkbechern zu einem Milchsammelstück strömen. Von dort aus strömt das Fluid über eine Milchschleuse zu einem Milchtank oder einem Abfluss. Strömt das Fluid in einem Spülbehälter, so kann diese über eine Spülleitung, die mit der Reinigungseinheit verbunden ist, wieder in den Kopfabschnitt des Zitzengummis gelangen. Mittels eines Vakuums, welches auch während des Melkvorgangs anliegt, kann ein Einsaugen des Fluids erreicht werden.

Diese zufriedenstellende Reinigungsmethode macht es jedoch erforderlich, dass in den Melkbechern ein Vakuum vorherrscht, um das Fluid in die Melkvorrichtung einzubringen. Des Weiteren ist es notwendig, dass ein Operator die Melkbecher in der Reinigungseinrichtung entsprechend positioniert. Es besteht die Problematik, dass beim Wechsel von einem Melkvorgang zu einem Reinigungsvorgang Vakuumverluste in der Melkvorrichtung auftreten können.

Eine Vorrichtung mit vergleichbaren Nachteilen ist auch aus der WO 2013/081534A1 bekannt.

Hiervon ausgehend liegt der vorliegenden Erfindung die Zielsetzung zugrunde, eine Melkvorrichtung bereitzustellen, bei der Vakuumverluste durch eine Kopplung der Melkbecher mit einer Spülaufnahme zumindest verringert werden. Ein weiteres Ziel der Erfindung ist es, den Aufwand zur Durchführung des Reinigungsvorgangs zu verringern.

Diese Aufgabe wird gelöst mit einer Melkvorrichtung gemäß dem unabhängigen Anspruch. Weitere vorteilhafte Ausgestaltungen sind Gegenstand der abhängigen Ansprüche.

Die erfindungsgemäße Melkvorrichtung umfasst ein Melkzeug, welches Melkbecher, die mit einem Milchsammelstück verbunden sind, aufweist. Die Anzahl der Melkbecher ist abhängig von der Art des zu melkenden Tiers.

Die Melkvorrichtung weist des Weiteren eine Milchschleuse, einen Milchtank und eine Reinigungseinrichtung auf.

Die Milchschleuse ist über eine Melkleitung mit einem Auslass des Milchsammelstücks verbunden. Die Milchschleuse weist einen Auslass auf, der über eine Milchleitung mit einem Milchtank verbindbar ist.

Bei der Milchschleuse handelt es sich um ein Bauteil, bei dem eine Abtrennung der Milch als Flüssigkeit erfolgt. Die bekannte Milchschleuse weist auch einen Anschluss an eine Vakuumquelle auf.

Die Reinigungseinrichtung umfasst eine Fluidquelle, eine Spülleitung, die mit der Fluidquelle und der Melkleitung strömungstechnisch verbindbar ist, eine Nebenleitung, die mit der Melkleitung und der Milchleitung strömungstechnisch verbindbar ist.

Um sicherzustellen, dass die Vakuumverluste verringert werden, ist eine erste Ventileinheit vorgesehen, die in Strömungsrichtung einer Milch betrachtet in der Melkleitung vor der Milchschleuse angeordnet ist.

Des Weiteren ist eine zweite Ventileinheit vorgesehen, die mit der Milchleitung und der Nebenleitung verbunden ist. Vermittels einer Steuereinrichtung werden die ersten und zweiten Ventileinheiten signaltechnisch angesteuert.

Zur Durchführung eines Reinigungsvorgangs wird die erste Ventileinheit in eine Stellung geschaltet, in der der Strömungsweg von dem Milchsammelstück zu der Milchschleuse unterbrochen wird. Ein in der Fluidquelle bereitgestelltes Fluid wird über die Spülleitung in die Melkleitung eingebracht. Das Fluid strömt durch die Melkleitung in die Milchschleuse und von dort aus in die Milchleitung. In Abhängigkeit von dem Schaltzustand der zweiten Ventileinheit kann das Fluid von der Milchleitung zurück z. B. in die Fluidquelle strömen, so dass eine Zirkulation des Fluids erreicht wird. Während dieses Reinigungszyklus erfolgt keine Durchströmung der Melkbecher. Hierdurch bedingt können höhere Strömungsgeschwindigkeiten während eines Reinigungsvorgangs erreicht werden. Höhere Strömungsgeschwindigkeiten führen auch zu einem verbesserten Reinigungsergebnis. Dies kann sich darin äußern: zum einen kann die Reinigungszeit verkürzt werden und zum anderen können auch Fluida eingespart werden.

Um die Reinigung der Melkbecher bzw. des Melkzeugs zu erreichen, strömt ein Fluid durch die Nebenleitung von der Milchleitung zu der Melkleitung. Hierzu wird zumindest die zweite Ventileinheit vorzugsweise sequentiell so geschaltet, dass Teilvolumina des Fluids zu und durch das Melkzeug strömen können.

Durch die erfindungsgemäße Melkvorrichtung werden Vakuumverluste vermieden, da die erste Ventileinheit den Strömungsweg von dem Melkzeug zur Milchschleuse hin unterbricht. Dies ist während des gesamten Reinigungszykluses der Fall.

Des Weiteren wird der Aufwand zur Durchführung des Reinigungsvorgangs verringert, da die Melkbecher nicht mehr in einer Reinigungseinheit positioniert werden müssen. Das aus dem Melkbechern heraustretende Fluid kann z. B. in einen entsprechenden Ausguss geleitet werden.

Die Dauer der Reinigung der Melkbecher und/oder weiterer Komponenten in der Vorrichtung kann in Abhängigkeit vom Ergebnis einer Analyse des zirkulierenden Teils der Fluid bestimmt werden. Hierzu können entsprechende Sensoren vorgesehen sein. Diese sind dann mit der Steuereinrichtung signaltechnisch verbunden.

Es besteht aber auch die Möglichkeit, die Dauer und die Zyklen der Reinigung entsprechend historischer Daten durchzuführen.

Die erste und die zweite Ventileinheit sind vorzugsweise auf diese Art und Weise ausgebildet, dass es sich hierbei um Mehrwegeventileinheiten handelt. Mehrwegeventileinheiten haben den Vorteil, dass diese den apparativen Aufwand verringern.

Die zweiten Ventileinheit kann über eine entsprechende Leitung mit einer Fluidquelle, bei der es sich bspw. um einen Vorratsbehälter handelt, verbunden sein. Auch die Spülleitung ist dann mit dem Vorratsbehälter verbunden. Der Vorratsbehälter als solcher kann auch durch mehrere Behältnisse gebildet werden, die unterschiedliche Fluida aufweisen, so dass je nach Anforderung hinsichtlich des Reinigungsergebnisses unter der Abfolge von Reinigungsschritten bspw. alkalische, neutrale oder basische Fluida bereitgestellt werden.

Gemäß einer weiteren vorteilhaften Ausgestaltung der erfindungsgemäßen Melkvorrichtung wird vorgeschlagen, dass die zweite Ventileinheit zwei Ventile umfasst, die in Strömungsrichtung der Milch betrachtet hintereinander angeordnet sind. Dabei ist ein erstes Ventil vorgesehen, das einen Strömungsweg zu der Nebenleitung freigibt oder sperrt. Das zweite Ventil sperrt den Strömungsweg zu der Spülleitung.

Von besonderem Vorteil ist es, wenn die Steuereinrichtung so ausgebildet ist, dass die zweite Ventileinheit einen Strömungsweg von der Milchleitung zu der Nebenleitung in vorgegebenen Zeitabständen und für eine vorgegebene Zeitdauer freigibt. Dies hat den Vorteil, dass nicht das gesamte Fluid durch die Melkbecher strömen muss.

Um sicherzustellen, dass im Falle von Fehlfunktionen es zu keiner Kontamination der Milchleitung bzw. des Systems, in dem Milch strömt, durch Reinigungsmittel kommt, ist es von Vorteil, wenn die Spülleitung ein erstes Sicherheitsventil aufweist. Durch dieses erste Sicherheitsventil wird auch verhindert, dass Milch in die Spülleitung strömen kann.

Die Nebenleitung weist vorzugsweise ein zweites Sicherheitsventil auf, so dass auch hierdurch sichergestellt wird, dass es zu keiner Kontamination der Milch führenden Teile während eines Melkvorgangs mit einem Reinigungsmittel bzw. Fluid kommt.
Bei dem Sicherheitsventil handelt es sich vorzugsweise um ein Rückschlagventil.

Durch die erfindungsgemäße Melkvorrichtung können unterschiedliche Reinigungszyklen realisiert werden. So besteht bspw. die Möglichkeit, die Milch führenden Teile ohne Melkbecher oder Melkzeug zu reinigen. Es besteht auch die Möglichkeit, den Reinigungsvorgang so durchzuführen, dass das Melkzeug intensiv gereinigt wird, in dem variabel zu bestimmende Reinigungsvolumina durch das Melkzeug strömen. So kann bspw. das gesamte Fluid die Milch führenden Teilen durch das Melkzeug verlassen, wodurch eine intensive Reinigung des Melkzeugs erreicht wird.

Weitere Vorteile und Einzelheiten der erfindungsgemäßen Vorrichtung werden anhand der in der Zeichnung dargestellten Ausführungsbeispiele erläutert, ohne dass der Gegenstand der Erfindung auf diese Ausführungsbeispiele beschränkt ist.

Es zeigen:
- Fig. 1:: schematisch eine Ausführungsform einer Melkvorrichtung mit einer Reinigungseinrichtung,
- Fig. 2:: ein Melkzeug und eine erste Ventileinheit einer Melkvorrichtung mit einer Reinigungsvorrichtung,
- Fig. 3:: eine weitere Ausgestaltung und Ausformung einer ersten Ventileinheit,
- Fig. 4, 5:: Ausgestaltungen und Varianten der Ventileinheit der Melkvorrichtung mit einer Reinigungseinrichtung.

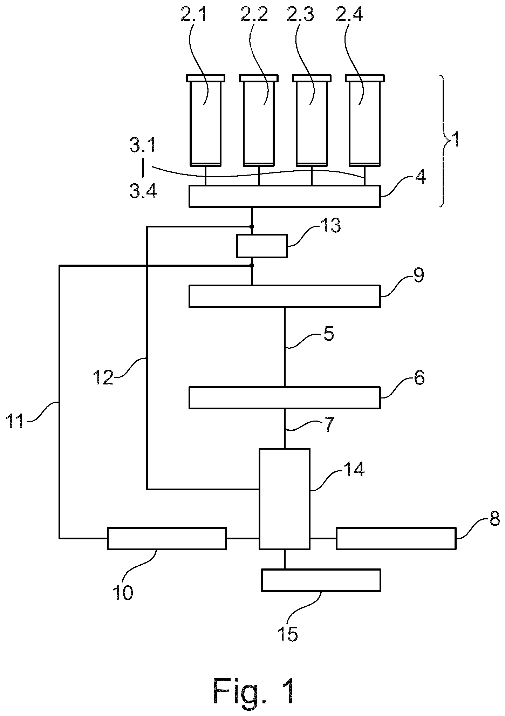

Fig. 1 zeigt schematisch eine Ausführungsform einer Melkvorrichtung mit einer Reinigungseinrichtung. Die Melkvorrichtung umfasst ein Melkzeug 1. Das Melkzeug 1 weist in dem dargestellten Ausführungsbeispiel vier Melkbecher 2.1-2.4 auf. Jeder Melkbecher 2.1-2.4 ist in einer herkömmlichen Bauweise ausgebildet. Der Melkbecher umfasst eine Becherhülse, in der ein sogenanntes Zitzengummi angeordnet ist. Der Auslass des Melkbechers 2.1-2.4 ist über einen kurzen Schlauch 3.1-3.4 mit einem Milchsammelstück 4 verbunden. Des Auslass des Milchsammelstücks 4 ist über eine Melkleitung 5 mit einer Milchschleuse 6 verbunden. Die Milchschleuse 6 ist über eine Milchleitung 7 mit einem Milchtank 8 verbunden.

Innerhalb der Melkleitung 5 ist schematisch eine Durchflusseinheit 9 dargestellt. Dies ist nicht zwingend notwendig, jedoch von Vorteil.

Die Melkvorrichtung nach Fig. 1 weist eine Reinigungseinrichtung auf, die aus mehreren Komponenten aufgebaut ist. Es ist eine Fluidquelle 10 vorgesehen. Bei der Fluidquelle 10 kann es sich um einen Behälter handeln, in dem ein Fluid, welches zur Reinigung der Melkvorrichtung geeignet und bestimmt ist, bevorratet wird. Die Fluidquelle kann auch mehrere Behälter umfassen, die unterschiedliche Fluida haben, so dass je nach Reinigungsfortschritt unterschiedliche Fluida den Reinigungsprozess als solchen durchführen.

Die Fluidquelle 10 ist über eine Spülleitung 11 mit der Melkleitung 5 verbunden. Des Weiteren ist eine Nebenleitung 12 vorgesehen, die mit der Melkleitung 5 und der Milchleitung 7 strömungstechnisch verbindbar ist.

Aus der Fig. 1 ist ersichtlich, dass in Strömungsrichtung einer Milch betrachtet in der Melkleitung 5 zwischen der Nebenleitung 12 und der Spülleitung 11 eine erste Ventileinheit 13 vorgesehen ist. Die Reinigungseinrichtung weist des Weiteren eine zweite Ventileinheit 14 auf, die in dem Ausführungsbeispiel mit der Milchleitung 7 und der Nebenleitung 12 verbunden ist. Aus der Darstellung nach Fig. 1 ist des Weiteren ersichtlich, dass die zweite Ventileinheit 14 auch mit dem Milchtank 8 sowie der Fluidquelle 10 verbunden ist. Mit dem Bezugszeichen 15 ist ein Abfluss bezeichnet, der über eine Leitung mit der zweiten Ventileinheit 14 verbunden ist.

Die Reinigungseinrichtung weist des Weiteren eine nicht dargestellte Steuereinrichtung auf, die mit der ersten und der zweiten Ventileinheit 13, 14 verbunden ist. Die Steuereinrichtung kann auch Teil einer Steuerung des Melkplatzes sein.

Während eines Melkvorgangs strömt Milch aus den Melkbechern 2.1-2.4 über die kurzen Milchschläuche 3.1-3.4 in das Milchsammelstück 4. Die im Milchsammelstück 4 zugsammengeführte Milch der einzelnen Melkbecher 2.1-2.4 strömt über einen Auslass des Milchsammelstücks in die Melkleitung 5 bis zu der Milchschleuse 6 und tritt in diese ein. Die erste Ventileinheit 13 ist dabei so ausgestaltet, dass diese den Strömungsweg von dem Milchsammelstück zu der Milchschleuse 6 in der Melkleitung 5 freigibt.

Während eines Melkvorgangs strömt in der Melkleitung 5 nicht nur Milch im Sinne einer Flüssigkeit, sondern auch Schaum sowie Luft. Die Strömung in der Melkleitung 5 während eines Melkvorgangs kann als eine Pfropfenströmung bezeichnet werden.

Die Milch gelangt aus der Melkleitung 5 in eine sogenannte Milchschleuse 6. In der Milchschleuse 6 erfolgt eine Abtrennung der Milch von der mitgeführten Luft. Die Milchschleuse kann hierbei als ein Behälter ausgebildet sein, der am unteren Bodenbereich einen Anschluss aufweist, durch den die Milch in Form einer Flüssigkeit zum Milchtank 8 abgeführt werden kann. Hierzu ist die Milchleitung 7 vorgesehen, die die Milchschleuse 6 mit dem Tank 8 verbindet. Die Milchschleuse 6 ist auch mit einer nicht dargestellten Vakuumeinrichtung verbunden

Der Bereich der Melkvorrichtung von den Melkbechern bis zu der Milchschleuse kann auch als ein Vakuumteil der Melkvorrichtung bezeichnet werden. In der Milchschleuse wird Milch bspw. mit Hilfe einer Milchpumpe, welche nicht dargestellt ist, zum Milchtank 8 geführt.

Handelt es sich bei der ermolkenen Milch um nicht verwertbare Milch, so kann die nicht verwertbare Milch z. B. in den Abfluss 15 oder einen Behälter für nicht verwertbare Milch geleitet werden. In der Milchleitung 7 ist eine zweite Ventileinheit 14 vorgesehen, die so ausgebildet ist, dass während des Melkvorgangs der Strömungsweg von der Milchschleuse 6 zum Milchtank 8 freigegeben ist. Die weiteren Verbindungen der zweiten Ventileinheit 14 zur Fluidquelle 10, dem Abfluss 15 und der Nebenleitung 12 sind in dieser Betriebssituation gesperrt.

Ein Reinigungsvorgang der Melkvorrichtung kann in mehrere Phasen unterteilt werden. Durch ein Vorspülen sollen Milchreste aus der Melkvorrichtung ausgespült werden. Das Vorspülen als solches kann zeitabhängig durchgeführt werden. Dies bedeutet, dass basierend auf historischen Daten wie z.B. Zeitdauer und die Kenntnis der Reingiungsfluida, eine "Milchfreiheit" der Melkvorrichutng erreicht wird. Der Vorspülvorgang kann auch durch eine Analyse des Fluids während des Vorspülvorgangs überwacht werden. Um den Vorspülvorgang durchzuführen, ist die erste Ventileinheit 13 so geschaltet, dass der Strömungsweg in der Melkleitung 5 zum Milchsammelstück 4 hin gesperrt ist. Die zweite Ventileinheit 14 ist so geschaltet, dass die Milchleitung 7 mit dem Abfluss 15 verbunden ist. Ein Fluid, bei dem es sich bspw. um Wasser handelt, strömt aus der Fluidquelle 10 über die Spülleitung 11 in die Melkleitung 5. Das Fluid durchströmt die Durchflusseinheit 9 sowie die Milchschleuse 6 und die zweite Ventileinheit 14 und verlässt die Melkvorrichtung über den Abfluss 15.

In Abhängigkeit vom Reinheitsgrad des Fluids und/oder der Dauer der Vorspülung wird die zweite Ventileinheit 14 so geschaltet, dass das Fluid über die Milchleitung 7 und die zweite Ventileinheit 14 in die Nebenleitung 12 einströmt. Die Nebenleitung 12 mündet in die Milchleitung 5, wobei der Mündungspunkt in dem dargestellten Ausführungsbeispiel oberhalb der ersten Ventileinheit 13 ist. Im Hinblick darauf, dass die erste Ventileinheit 13 den Strömungsweg in der Milchleitung 5 sperrt, strömt das Fluid durch den Milchsammelbehälter 4 und die kurzen Milchschläuche 3.1-3.4 in die einzelnen Melkbecher 2.1.-2.4 und verlässt von dort aus die Melkvorrichtung. Das Fluid spült die Melkbecher 2.1-2.4 frei von Milchresten.

Das Fluidvolumen, welches durch die Nebenleitung 12 in die Melkbecher 2.1-2.4 einströmt, ist auch abhängig von der Dauer der Stellung der zweiten Ventileinheit 14. So kann bspw. das Fluid, welches zum Vorspülen genutzt wird, vollständig über die Melkbecher 2.1-2.4 entleert werden. Es besteht jedoch auch die Möglichkeit, durch entsprechende Schaltung mit Freigabe von Strömungswegen in der zweiten Ventileinheit 14, dass das Fluid, welches für das Vorspülen genutzt wird, teilweise über die Melkbecher 2.1-2.4 und teilweise über den Ablass 15 aus der Melkvorrichtung abgeführt werden.

Ist durch das Vorspülen der gewünschte Reinigungsgrad der Melkvorrichtung erreicht, so kann nach dem Vorspülen eine Hauptreinigung durchgeführt werden. Die Hauptreinigung kann dabei auch in unterschiedliche Phasen unterteilt werden, so können z. B. in Abhängigkeit von der Zuführung von Chemikalien, z. B. alkalische oder saure Chemikalien auch Zwischenspülungen, um chemische Reaktionen zu vermeiden, erfolgen.

Für die Hauptreinigung ist die ersten Ventileinheit 13 so geschaltet, dass der Strömungsweg in der Melkleitung 5 vom Milchsammelstück 4 zur Milchschleuse 6 hin gesperrt ist. Die zweite Ventileinheit 14 ist zum Start der Hauptreinigung so geschaltet, dass die Milchleitung 7 mit der Spülleitung 11 über die Fluidquelle 10 strömungstechnisch verbunden ist. Die anderen Auslässe der zweiten Ventileinheit 14, die zu der Nebenleitung 12, dem Ablass 15 sowie dem Milchtank 8 führen, sind gesperrt.

Ein Fluid strömt aus der Fluidquelle 10, bei der es sich um einen Spülbehälter handeln kann, in dem ein definiertes Volumen an Fluid vorhanden ist, über die Spülleitung 11 in die Milchleitung 5. Das Fluid durchströmt in dem dargestellten Ausführungsbeispiel die Durchflusseinheit 9, die Milchschleuse 6 und strömt in die Milchleitung 7, von wo aus das Fluid über die zweite Ventileinheit 14 zurück in die Fluidquelle 10 gelangt. Von dort aus strömt das Fluid wieder in die Spülleitung 11, so dass eine Zirkulation des Fluids erreicht wird.

Nach vorgegebenen Kriterien oder durch Messungen des im Leitungssystem strömenden Fluids kann die Zeitdauer entweder vorgegeben sein oder in Abhängigkeit vom Ergebnis der Messung die Zirkulation beendet werden. Dabei besteht dann die Möglichkeit, über eine entsprechende Schaltung der zweiten Ventileinheit 14 das Fluid zum Ablass 15 abfließen zu lassen.

Bei einer solchen Verfahrensführung werden Teile der Melkvorrichtung einer Hauptreinigung unterzogen. Um das Milchsammelstück 4 und die Melkbecher 2.1-2.4 in den Hauptreinigungsvorgang zu integrieren, können zwei Varianten unabhängig voneinander oder im Kombination durchgeführt werden. In einer ersten Variante wird die zweite Ventileinheit 14 für eine vorgegebene Zeitdauer so geschaltet, dass das Fluid über die Nebenleitung 12 aus der Melkvorrichtung über das Milchsammelstück 4, die kurzen Schläuche 3.1-3.4 sowie die Melkbecher 2.1-2.4 verlässt. Hierdurch wird auch eine Hauptreinigung des Milchsammelstücks 4, der kurzen Schläuche 3.1-3.4 und der Melkbecher 2.1-2.4 erreicht. Das Durchspülen des Melkzeugs 1 kann dabei während der Zeitdauer der Hauptreinigung öfters durchgeführt werden. Das verbleibende Fluid wird dann bei der Reinigung des Milchsammelstücks 4, der kurzen Schläuche 3.1-3.4 und der Melkbecher 2.1-2.4 erreicht. Das verbleibende Fluid wird dann zum Ende der Reinigung über den Ablass 15 abgeführt.

In der zweiten Variante erfolgt ein Ablassen des Fluids nicht über den Ablass 15 sondern vollständig über das Melkzeug 1.

Kommen während der Hauptreinigung Chemikalien zum Einsatz, so ist es notwendig, die Melkvorrichtung von den Chemikalien zu befreien. Dies erfolgt durch ein Nachspülen, durch welches mögliche Reste chemischer Verbindungen aus der Melkvorrichtung entfernt werden. Der Nachspülvorgang entspricht hierbei im Wesentlichen der Verfahrensführung, wie bei einem Vorspülen. Zum Nachspülen wird bspw. Wasser aus der Fluidquelle 10 über die Spülleitung 11 der Melkleitung zugeführt. Die Melkleitung 5 wird gespült. Dies gilt auch für die Durchflusseinheit 9 und die Milchschleuse 6. Die zweite Ventileinheit 14 wird dabei so geschaltet, dass das Fluid, welches für die Nachspülung verwendet wird, über die Nebenleitung zu dem Melkzeug 1 strömen kann. Durch entsprechende Schaltung der zweiten Ventileinheit 14 kann auch eine Zirkulation des Fluids der Nachspülung erreicht werden, wobei zumindest ein Teil des Fluids der Nachspülung durch das Melkzeug 1 abgeführt wird.

Ein Reinigungsvorgang kann sich unmittelbar an einen Melkvorgang anschließen. Während des Melkvorgangs liegt im Vakuumteil der Melkvorrichtung, wobei der Vakuumteil der Melkvorrichtung die Melkbecher 2.1-2.4, die kurzen Schläuche 3.1-3.4, das Milchsammelstück 4, die Durchflusseinheit 9, die Melkleitung 5 sowie die Schleuse 6 umfasst. Wird nach dem Ende des Melkvorgangs die erste Ventileinheit 13 so geschaltet, dass die strömungstechnische Verbindung zwischen Melkzeug 1 und der Milchschleuse 6 unterbrochen wird, so herrscht zwischen der ersten Ventileinheit 13 und der Milchschleuse 6 ein Vakuum. Dieses wirkt sich auch auf die Leitung 11 aus, so dass eine Flüssigkeit in die Melkleitung 5 eingesaugt werden kann. Ein Vorteil ist auch, dass die Vakuumverluste, die durch die frei gewordenen Melkbecher 2.1-2.4 entstehen können, verringert werden.

Ab der Milchschleuse 6 wird die Milch in der Milchleitung 7 mit Hilfe einer Milchpumpe zum Tank 8 gefördert. Ist die zweite Ventileinheit 14 hinter der Milchpumpe, welches nicht dargestellt ist, in der Milchleitung 7 angeordnet, so kann die Milchpumpe zur Förderung des Fluids während eines Reinigungsvorgangs verwendet werden.

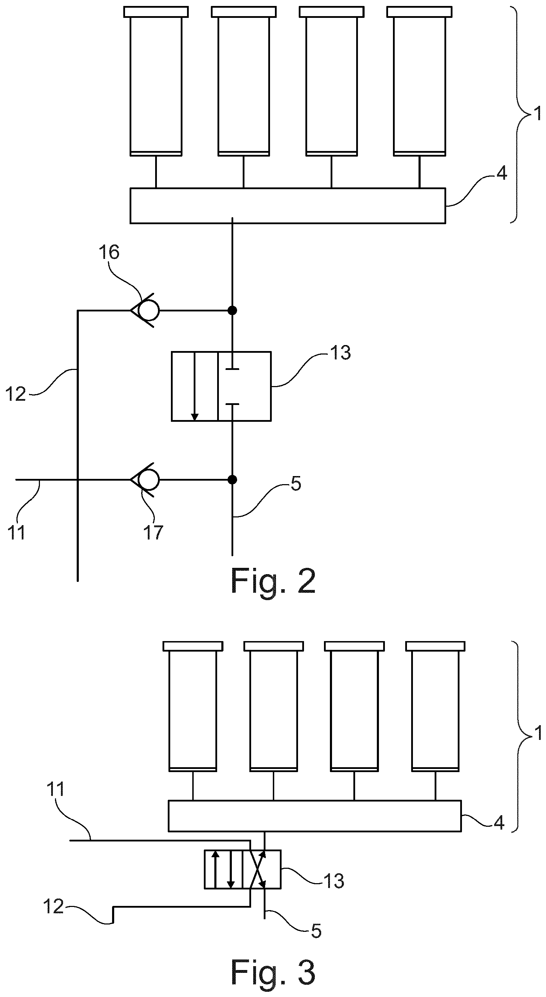

Fig. 2 zeigt schematisch eine Einzelheit der Melkvorrichtung nach Fig. 1. Gleiche Bauteile sind mit gleichen Bezugszeichen versehen.

Die Fig. 2 zeigt ein Melkzeug 1, welches mit einer Melkleitung 5 verbunden ist. Innerhalb der Melkleitung 5 ist eine Ventileinheit 13 dargestellt. Die Ventileinheit 13 hat zwei Schaltzustände. In dem dargestellten Schaltzustand wird der Strömungsweg in der Melkleitung 5 vom Melkzeug 1 in Richtung des Tanks gesperrt. Durch Umschalten der ersten Ventileinheit 13 kann die strömungstechnische Verbindung zwischen Melkzeug 1 und dem nicht dargestellten Tank hergestellt werden.

Aus der Darstellung in der Fig. 2 ist ersichtlich, dass die Spülleitung 11 in Strömungsrichtung der Milch betrachtet mit der ersten Ventileinheit 13 nachfolgend mit der Milchleitung 5 verbunden ist. Die Nebenleitung 12 ist in Strömungsrichtung der Milch betrachtet vor der ersten Ventileinheit 13 mit der Milchleitung 5 verbunden. In der Nebenleitung 12 ist ein Rückschlagventil 16 angeordnet. Durch das Rückschlagventil 16 wird verhindert, dass während des Melkvorgangs Milch in die Nebenleitung 12 gelangt. Ein entsprechendes Rückschlagventil 17 ist in der Spülleitung 11 gleichfalls angeordnet. Statt der Rückschlagventile 16, 17 können auch andere Ventile verwendet werden, um sicherzustellen, dass während des Melkvorgangs keine Milch in die Spülleitung 11 und/oder die Nebenleitung 12 gelangt. Des Weiteren kann eine Kontamination der Milch während eines Melkvorgangs vermieden werden. Bei den Ventilen 16 und 17 handelt es sich um Sicherheitsventile, die auch in einer anderen Bauform ausgebildet werden können.

Fig. 3 zeigt eine weitere Ausgestaltung und Ausformung einer ersten Ventileinheit 13. In dem dargestellten Ausführungsbeispiel handelt es sich bei der ersten Ventileinheit 13 um ein sogenanntes Vier-Zwei-Wegeventil - nachfolgen als 4/2- Wegeventil bezeichnet. Die allgemein bekannte Bezeichnung 4/2-Wegeventil bedeutet, dass das Ventil vier Wege und zwei Schaltzustände hat.

In der in der Fig. 3 dargestellten Einstellung der ersten Ventileinheit 13 ist die Spülleitung 11 mit der Milchleitung 5 strömungstechnisch verbunden. Dies gilt auch für die Nebenleitung 12, wobei die Strömungsrichtungen entgegengesetzt sind. So strömt ein Fluid durch die Spülleitung 11 und die erste Ventileinheit 13 in die Melkleitung 5 in Richtung des Milchtanks 8, während ein Fluid, welches durch die Nebenleitung 12 strömt, die erste Ventileinheit 13 durchströmt und durch das Melkzeug 1 herausströmt. Das 4/2-Wegeventil kann auch durch einen entsprechende Schaltung von Ventilen realisiert werden.

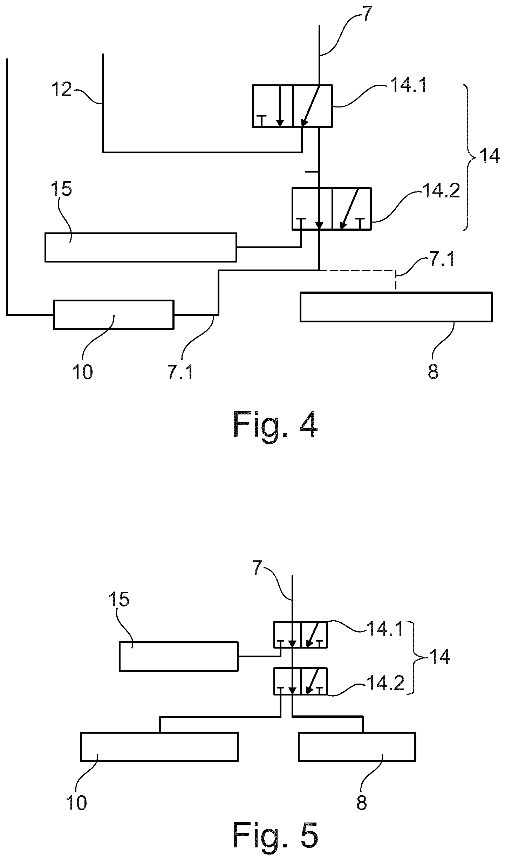

In den Fig. 2 und 3 sind unterschiedliche Ausgestaltungen der ersten Ventileinheit 13 im Rahmen der erfindungsgemäßen Melkvorrichtung mit einer Reinigungseinrichtung dargestellt. Die Fig. 4 und 5 zeigen Ausgestaltungen und Varianten der zweiten Ventileinheit 14 der Melkvorrichtung, wobei in den Darstellungen nach Fig. 4 und 5 lediglich die im Zusammenhang mit der zweiten Ventileinheit 14 relevanten Teile der Melkvorrichtung dargestellt sind.

Die zweite Ventileinheit 14 ist in der Milchleitung 7 angeordnet. Im dargestellten Ausführungsbeispiel umfasst die zweite Ventileinheit 14 zwei schaltbare Ventile 14.1 und 14.2, die in Strömungsrichtung der Milch betrachtet nacheinander angeordnet sind. Fig. 4 zeigt des Weiteren einen Milchtank 8, eine Fluidquelle 10, einen Abfluss 15 sowie die Spülleitung 11 und die Nebenleitung 12.

Das Ventil 14.1, welches in der Milchleitung 7 angeordnet ist, ermöglicht eine strömungstechnische Verbindung zwischen der Milchleitung 7 und der Nebenleitung 12. Diese Stellung ist in der Fig. 4 dargestellt. Ein Fluid, welches durch die Milchleitung 7 strömt, durchströmt das Ventil 14.1 und gelangt in die Nebenleitung 12, so dass das Fluid dann durch die nicht dargestellten Bauteile, insbesondere das Melkzeug der Melkvorrichtung, diese verlassen kann. Das Ventil 14.1 ist vorzugsweise steuerbar, so dass das die Dauer der Verbindung zwischen der Milchleitung 7 und der Nebenleitung 12 beeinflusst werden kann. Wird das Ventil 14.1 in die zweite Stellung geschaltet, so ist die Nebenleitung 12 gesperrt. Ein Fluid oder Milch, je nachdem für welchen Verwendungszweck das Ventil 14.1 geschaltet ist, durchströmt dieses das Ventil 14.1.

In Strömungsrichtung betrachtet ist nach dem Ventil 14.1 ein zweites Ventil 14.2 dargestellt. In der dargestellten Schaltstellung des zweiten Ventils 14.2 kann ein Fluid durch das Ventil 14.2 zu der Fluidquelle 10 strömen. Die Verbindung zwischen dem Ventil 14.2 und dem Abfluss 15 ist gesperrt.

Aus der Fig. 4 ist ersichtlich, dass der Milchtank 8 nicht an die Milchleitung 7 gekoppelt ist. Der Endabschnitt 7.1 der Milchleitung 7 ist so ausgebildet, dass der Auslass der Milchleitung 7 manuell mit der Fluidquelle 10 oder dem Milchtank 8 verbunden werden kann. In dem dargestellten Ausführungsbeispiel ist der Endabschnitt 7.1 der Milchleitung 7 mit der Fluidquelle verbunden. Das manuelle Abschalten bzw. Umlegen der Verbindung zwischen der Fluidquelle und dem Milchtank hat den Vorteil, dass mögliche Fehlfunktionen von Ventilen beim Eintritt während der Reinigung nicht dazu führen, dass die sich im Milchtank 8 befindende Milch kontaminiert wird.

Gestrichelt ist in der Fig. 4 dargestellt, wie der Endabschnitt 7.1 der Milchleitung 7 mit dem Tank 8 verbunden ist.

Während des Melkvorgangs ist der Abschnitt 7.1 mit dem Milchtank 8 verbunden. Das Ventil 14.1 ist so geschaltet, dass der Einlass der Nebenleitung 12 gesperrt ist und Milch durch das Ventil 14.1 strömen kann. Das Ventil 14.2 weist die in der Fig. 4 dargestellte Stellung auf. Der Endabschnitt 7.1 ist mit dem Milchtank 8 verbunden.

Soll bspw. Milch, die nicht verwertbar ist, verworfen werden, kann das Ventil 14.2 in seine zweite Schaltstellung geschaltet werden. In dieser Schaltstellung ist der Abschnitt der Milchleitung 7 gesperrt, die strömungstechnische Verbindung zwischen der Milchleitung 7 und dem Abfluss 15 ist gegeben. Die gleiche Stellung des Ventils 14.2 kann dann eingenommen werden, wenn das Fluid, welches zur Reinigung verwendet wird, über den Ablass 15 verworfen werden soll.

Eine weitere Ausgestaltung einer zweiten Ventileinheit 14 ist in der Fig. 5 dargestellt. In dieser Ausführungsform der Ventileinheit 14 umfasst die Ventileinheit 14 ein erstes Wegeventil 14.1, welches zwei Schaltstellungen einnehmen kann. In jeder Schaltstellung ist ein Durchfluss möglich. Des Weiteren sind Sperrstellungen möglich. Auch das zweite Ventil 14.2 der Ventileinheit 14 ist entsprechend ausgebildet. In dieser Ausführungsform der zweiten Ventileinheit 14 kann eine automatische Umstellung des Strömungswegs von der Milchleitung 7 entweder zum Milchtank 8, wie dieser in der Fig. 5 dargestellt ist, oder zur Fluidquelle 10 erreicht werden. Wird das zweite Ventil 14.2 in die zweite Schaltstellung überführt, so ist die Verbindung zwischen dem Ventil 14.2 und dem Milchtank 8 gesperrt. Die Verbindung zwischen der Milchleitung 7 und der Fluidquelle 10 wird hergestellt.

Wird das ersten Ventil 14.1 der zweiten Ventileinheit 14 aus der dargestellten Schaltstellung in die zweite Schaltstellung überführt, so entsteht ein Strömungsweg zwischen der Milchleitung 7 und dem Abfluss 15. Der Strömungsweg zum Milchtank 8 und zu der Fluidquelle 10 wird gesperrt.

Neben den vorstehend genannten Vorteilen der Erfindung kann durch ein Sperren der Ventileinheit 13 das Anlagenvakuum vor einen Melkbeginn oder einzelnen Spülphasen einfacher aufgebaut werden

Die erfindungsgemäße Melkvorrichtung ist vorzugsweise ein Teil eines Melksystems, bei dem es sich um einen Gruppenmelkstand und insbesondere um ein Melkkarussell handeln kann.

### Bezugszeichenliste

- 1: Melkzeug
- 2.1-2.4: Melkbecher
- 3.1-3.4: kurzer Schlauch
- 4: Milchsammelstück
- 5: Melkleitung
- 6: Milchschleuse
- 7: Milchleitung
- 7.1: Endabschnitt der Milchleitung
- 8: Milchtank
- 9: Durchflusseinheit
- 10: Fluidquelle
- 11: Spülleitung
- 12: Nebenleitung
- 13: erste Ventileinheit
- 14: zweite Ventileinheit
- 14.1: erstes Ventil
- 14.2: zweites Ventil
- 15: Abfluss
- 16, 17: Rückschlagventil

## Patentansprüche

1. Melkvorrichtung umfassend
ein Melkzeug (1), welches Melkbecher (2.1-2.4), die mit einem Milchsammelstück (4) verbunden sind, aufweist,
eine Milchschleuse (6),
einen Milchtank (8),
eine Reinigungseinrichtung
wobei eine Melkleitung (5) einen Auslass des Milchsammelstücks (4) mit einem Einlass der Milchschleuse (6) verbindet, und die Milchschleuse (6) über eine Milchleitung (7) mit dem Milchtank (8) verbindbar ist,
wobei die Reinigungseirichtung
eine Fluidquelle (10)
eine Spülleitung (11), die mit der Fluidquelle (10) und der Melkleitung (5) strömungstechnisch verbindbar ist,
eine Nebenleitung (12), die mit der Melkleitung (5) und der Milchleitung (7) strömungstechnisch verbindbar ist, aufweist, und die Reinigungseinrichtung des Weiteren
eine erste Ventileinheit (13), die in Strömungsrichtung einer Milch betrachtet in der Melkleitung (5) vor der Milchschleuse (6) angeordnet ist,
eine zweite Ventileinheit (14), die mit der Milchleitung (7) und der Nebenleitung (12) verbunden ist, und
eine Steuereinrichtung, die signaltechnisch mit der ersten und der zweiten Ventileinheit (13, 14) verbunden ist, aufweist.

2. Melkvorrichtung nach Anspruch 1, wobei die erste oder zweite Ventileinheit () eine Mehrwege Ventileinheit ist.

3. Melkvorrichtung nach Anspruch 1 oder 2, wobei die Fluidquelle (10) mit der zweiten Ventileinheit (14) verbunden ist.

4. Melkvorrichtung nach Anspruch 1, 2 oder 3, wobei die zweite Ventileinheit (14) zwei Ventile (14.1, 14.2) umfasst, die in Strömungsrichtung der Milch betrachtet hintereinander angeordnet sind, wobei ein erstes Ventil (14.1) einen Strömungsweg zu der Nebenleitung (12) und ein zweite Ventil (14.2) einen Strömungsweg zu der Spülleitung (11) frei gibt oder sperrt.

5. Melkvorrichtung nach einem der Ansprüche 1 bis 4, wobei die Steuereinrichtung so ausgebildet ist, die zweite Ventileinheit (14) einen Strömungsweg von der Milchleitung (7) zu der Nebenleitung (12) in vorgegebenen Zeitabständen und für vorgegebene Zeitdauer freigibt.

6. Melkvorrichtung nach einem der Ansprüche 1 bis 5, wobei erste Ventileinheit (13) zwischen der Nebenleitung (12) und der Spülleitung (11) angeordnet und mit diesen verbunden ist.

7. Melkvorrichtung nach einem der Ansprüche 1 bis 6, wobei die Spülleitung (11) ein erstes Sicherheitsventil (16) aufweist.

8. Melkvorrichtung nach einem der Ansprüche 1 bis 7, wobei die Nebenleitung (12) ein zweites Sicherheitsventil (17) aufweist.

9. Melkvorrichtung nach Anspruch 7 oder 8, wobei das erste oder das zweite Sicherheitsventil (16, 17) ein Rückschlagventil ist.

## Claims

1. Milking device comprising
a milking cluster (1) which has teat cups (2.1-2.4) connected to a claw (4),
a releaser (6),
a milk tank (8),
a cleaning unit,
wherein a milking line (5) connects an outlet of the claw (4) to an inlet of the releaser (6), and the releaser (6) can be connected via a milk line (7) to the milk tank (8),
wherein the cleaning unit has
a fluid source (10),
a flushing line (11) which can be fluidically connected to the fluid source (10) and to the milking line (5),
a secondary line (12) which can be fluidically connected to the milking line (5) and to the milk line (7), and the cleaning unit further has
a first valve unit (13) which is arranged in the milking line (5) upstream of the releaser (6) in the milk flow direction,
a second valve unit (14) which is connected to the milk line (7) and the secondary line (12), and
a control device which is connected by means of signals to the first and second valve units (13, 14).

2. Milking device according to Claim 1, wherein the first or second valve unit () is a multi-way valve unit.

3. Milking device according to Claim 1 or 2, wherein the fluid source (10) is connected to the second valve unit (14).

4. Milking device according to Claim 1, 2 or 3, wherein the second valve unit (14) comprises two valves (14.1, 14.2) which are arranged one behind the other in the milk flow direction, wherein a first valve (14.1) frees or blocks a flow path to the secondary line (12) and a second valve (14.2) frees or blocks a flow path to the flushing line (11).

5. Milking device according to one of Claims 1 to 4, wherein the control device is configured such that the second valve unit (14) frees a flow path from the milk line (7) to the secondary line (12) at given time intervals and for a predefined period of time.

6. Milking device according to one of Claims 1 to 5, wherein the first valve unit (13) is arranged between the secondary line (12) and the flushing line (11) and is connected thereto.

7. Milking device according to one of Claims 1 to 6, wherein the flushing line (11) has a first safety valve (16).

8. Milking device according to one of Claims 1 to 7, wherein the secondary line (12) has a second safety valve (17).

9. Milking device according to Claim 7 or 8, wherein the first or the second safety valve (16, 17) is a check valve.

## Revendications

1. Dispositif de traite comprenant
un équipement de traite (1), lequel comporte des gobelets trayeurs (2.1 - 2.4), qui sont reliés à une pièce de collecte de lait (4),
un extracteur de lait (6),
un réservoir de lait (8),
un système de nettoyage
une conduite de traite (5) reliant une sortie de la pièce de collecte de lait (4) à une entrée de l'extracteur de lait (6) et l'extracteur de lait (6) pouvant être relié au réservoir de lait (8) par une conduite de lait (7),
le système de nettoyage comportant
une source de fluide (10)
une conduite de rinçage (11), qui peut être reliée en communication fluidique à la source de fluide (10) et à la conduite de traite (5),
une conduite secondaire (12), qui peut être reliée en communication fluidique à la conduite de traite (5) et à la conduite de lait (7) et le système de nettoyage comportant par ailleurs
une première unité de soupape (13), qui est disposée, vue dans la direction d'écoulement du lait, dans la conduite de traite (5) devant l'extracteur de lait (6),
une deuxième unité de soupape (14), qui est reliée à la conduite de lait (7) et à la conduite secondaire (12), et
un système de commande, qui est relié par une technique de signaux à la première et à la deuxième unité de soupape (13, 14).

2. Dispositif de traite selon la revendication 1, la première ou la deuxième unité de soupape () étant une unité de soupape à distributeurs multiples.

3. Dispositif de traite selon la revendication 1 ou 2, la source de fluide (10) étant reliée à la deuxième unité de soupape (14).

4. Dispositif de traite selon la revendication 1, 2 ou 3, la deuxième unité de soupape (14) comprenant deux soupapes (14.1, 14.2), qui sont disposées l'une derrière l'autre vues dans la direction d'écoulement du lait, une première soupape (14.1) débloquant ou bloquant un trajet d'écoulement vers la conduite secondaire (12) et une seconde soupape (14.2) débloquant ou bloquant un trajet d'écoulement vers la conduite de rinçage (11).

5. Dispositif de traite selon l'une des revendications 1 à 4, le système de commande étant réalisé de telle sorte que la deuxième unité de soupape (14) débloque un trajet d'écoulement depuis la conduite de lait (7) vers la conduite secondaire (12) à des intervalles de temps prédéfinis et pendant des durées prédéfinies.

6. Dispositif de traite selon l'une des revendications 1 à 5, la première unité de soupape (13) étant disposée entre la conduite secondaire (12) et la conduite de rinçage (11) et étant reliée à celles-ci.

7. Dispositif de traite selon l'une des revendications 1 à 6, la conduite de rinçage (11) comportant une première soupape de sécurité (16).

8. Dispositif de traite selon l'une des revendications 1 à 7, la conduite secondaire (12) comportant une deuxième soupape de sécurité (17).

9. Dispositif de traite selon la revendication 7 ou 8, la première ou la deuxième soupape de sécurité (16, 17) étant une soupape antiretour.
